# EUROPEAN PATENT APPLICATION

(11) **EP 1 104 140 A2**
(43) Date of publication of application: **30.05.2001**
(21) Application number: 00310571.5
(22) Date of filing: 29.11.2000
(51) Int. Cl.: H04L 27/26

(54) **Reduction of clipping in a multicarrier transmitter**

(30) Priority: 29.11.1999 GB 9928184
(71) Applicant: BRITISH BROADCASTING CORPORATION, London W1A 1AA (GB)
(72) Inventor: Moss, Peter Neil c/o British Broadcasting Corp., Tadworth, SurreyKT20 6NP (GB)
(74) Representative: Abnett, Richard Charles

(57) **Abstract**

In an OFDM transmitter, the input signal is modified in several different ways by sign switches (22) operating on sub-bands generated by a splitter (20). An inverse fast Fourier transform circuit (14) generates an output for each of all the possible types of modification producing a plurality of candidate signals. The signal of best quality is selected by subjecting the candidate signals to processing in a model (54) representing the transmitter amplifier (16), and estimating the candidate signal of best quality determined by a clip energy estimator (58) and/or a low-level estimator (60). A control circuit (64) then causes the transmitter to transmit the candidate signal of best quality together with signalling information indicating the corresponding setting of the sign switches (22).

## Description

### BACKGROUND OF THE INVENTION

This invention relates to improvements in the transmission of OFDM (Orthogonal Frequency Division Multiplexed) signals.

OFDM is used in proposals for digital radio broadcasting, such as DRM (Digital Radio Mobile) or IBOC DSB (In-Band On-Channel Digital Sound Broadcasting). Such digital sound broadcasting systems are described in: International Telecommunications Union, Radio Communication Study Groups, Document 6/63-E, 25 October 2000, "System for Digital Sound Broadcasting in the Broadcasting Bands below 30MHz". This document includes transmitter and receiver block diagrams and full details of the proposed systems.

The present invention will be described by way of example with reference to OFDM signals as generated in the DRM system. However the invention is not limited to such application and can be used in connection with other types of OFDM system.

A well-known drawback of OFDM is an inherently high peak-to-mean power ratio. Although quite tolerant of modest degrees of envelope clipping in the amplification chain, better results are possible if the signal is pre-processed to reduce the occurrence of peaks.

A system proposed by Motorola for DRM (see 'DRM Peak-to-Average Power Reduction Technique Proposal', Presentation at DRM TC CM Erlangen meeting, 8 September 1999, Markus Muck and Marc de Courville), is a 'tone injection' method which reduces the peak-to-mean ratio by judicious use of extra constellation points. This system has the advantages that no distortion is introduced and no signalling is necessary. Net performance gains however, once changes to average power and C/N (carrier to noise) performance have been accounted for, appear at the moment to be modest.

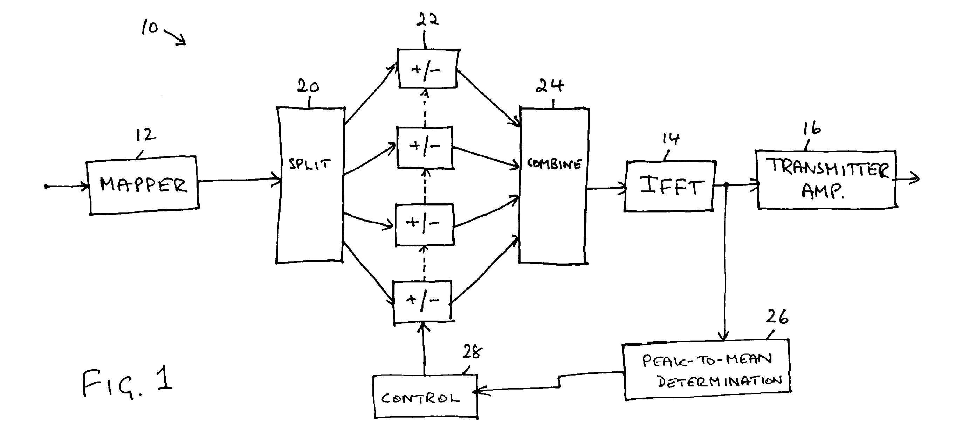

In an informal unpublished suggestion it has been proposed to divide the active carriers into a number of sub-bands (N), conveniently a power of two, and generate 2^{N} different time-domain signals via an IFFT (Inverse Fast Fourier Transform circuit) performing the OFDM operation, by assigning to each sub-band a positive or negative sign in all combinations. This proposal is illustrated in Figure 1 of the drawings, which shows the additional circuitry required at the transmitter.

Referring to Figure 1 the portion of the transmitter 10 illustrated extends from the mapper 12 which provides, in this case, a 64-QAM (quadrature amplitude modulated) signal to an inverse fast Fourier transform (IFFT) circuit 14, the output of which is sent to the rest of the transmitter including an amplifier 16 and other well-known components. The IFFT serves to implement the orthogonal frequency division multiplexing operation in known manner. Between the mapper 12 and the IFFT 14 are located a splitter 20 receiving the output of the mapper 12 and applying it to four so-called sign switches 22, the outputs of which are combined in a combining circuit 24 for application to the IFFT 14. The splitter 20 divides the active carriers received from the mapper 12 into a plurality of sub-bands, in this case four. The four sub-bands are then selectively given a positive or negative sign in all possible combinations. In principle that is sixteen combinations; however, since members of one set of eight have the same peak-to-mean ratio as the corresponding members of the completely inverted set, only eight signals actually need to be considered in this example.

Such an arrangement can be used to reduce the peak-to-mean power ratio by trying all eight possible combinations of positive and negative in the sign switches 22 and seeing which produces the lowest peak-to-mean power ratio. Thus a peak-to-mean power ratio determination circuit 26 is connected to the output of the IFFT and provides an output to a control circuit 28.

The system would operate as follows. The control circuit 28 starts by setting the four sign switches 22 to a specified setting, eg all positive. The peak-to-mean determination circuit 26 then determines the peak-to-mean power ratio for this setting. The control circuit 28 then moves to the next of the eight possible combinations, and a new determination of the peak-to-mean power ratio made. This is repeated until measurements are made for all the eight possible combinations of positive and negative settings for the sign switches. The one of these eight candidate combinations which produces the best (lowest) peak-to-mean power ratio is then selected, and the control circuit 28 is instructed to adopt this combination of settings for the circuits 22. The output of the IFFT 14 which is now obtained is then applied to the transmitter amplifier etc., 16, and is transmitted.

Also it is necessary to include, in the transmitted signal, signalling data which tells the receiver which combination of the sign switch settings has been used. This is not shown on Figure 1 to avoid complexity.

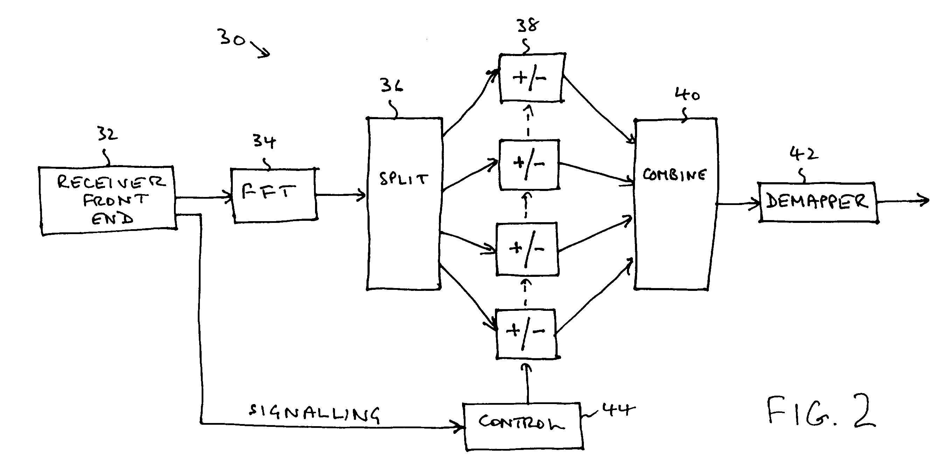

Corresponding circuitry needs to be included in each receiver, and is illustrated in Figure 2. The receiver 30 has a front end 32 including the conventional RF and IF circuits providing an input to a fast Fourier transform (FFT) circuit 34. The output of FFT 34 is split into four sub-bands by a splitter 36, and the signal of each sub-band (positive or negative) can be varied in a sign switch 38. The outputs of the four sign switches 38 are combined in a combiner 40 and supplied to a demapper 42 and on to the rest of the receiver circuits. The signalling information which was added at the transmitter is extracted in the receiver front end 32 and output separately to a control circuit 44. The control circuit 44 is thus instructed as to what are the chosen settings for the sign switches 38 and controls the sign switches accordingly. In this way the sign switching introduced in the transmitter is compensated for.

We have appreciated that this proposal, although representing an improvement over previous approaches, still does not provide an optimum solution to the problem of the high peak-to-mean power ratio of an OFDM signal. We have also appreciated that an alternative approach not only gives improved results as regards the peak-to-mean power ratio but can also be used to address other problems with OFDM signals.

For example, as well as producing undesirable peaks, the conventional OFDM signal envelope can exhibit near-zero excursions. With some types of amplifier, e.g. the Envelope Elimination and Restoration format used in HF transmitters, such low-envelope levels can themselves be undesirable. An improved peak-to-mean reduction scheme can alternatively or additionally be configured for low-envelope avoidance, in an attempt to minimise such excursions.

### SUMMARY OF THE INVENTION

The invention in its various aspects is defined in the appended claims, to which reference should now be made. Advantageous features of the invention are set forth in the appendant claims.

In an OFDM transmitter forming a preferred embodiment of the invention and described in more detail below, the input signal is modified in several different ways by sign switches operating on sub-bands generated by a splitter. An inverse fast Fourier transform circuit generates an output for each of all the possible types of modification producing a plurality of candidate signals. The signal of best quality is selected by subjecting the candidate signals to processing in a model representing the transmitter amplifier, and estimating the candidate signal of best quality determined for example by a clip energy estimator and/or a low-level estimator. A control circuit then causes the transmitter to transmit the candidate signal of best quality together with signalling information indicating the corresponding setting of the sign switches.

### BRIEF DESCRIPTION OF THE DRAWINGS

The invention will now be described by way of example with reference to the drawings, in which:
Figure 1 (referred to above) is a block schematic diagram of the relevant part of a DRM transmitter;
Figure 2 (referred to above) is a block schematic diagram of the corresponding part of a DRM receiver;
Figure 3 is a block diagram similar to Figure 1 of the same part of a DRM transmitter embodying the present invention;
Figure 4 is a block diagram of the clip energy estimator in the system of Figure 3;
Figure 5 is a block diagram of the low-level estimator in the system of Figure 3;
Figure 6 illustrates a computer simulation used to determine the effectiveness of the system; and
Figure 7 illustrates two possible types of non-linearity in the transmitter amplifier.

### DETAILED DESCRIPTION OF THE PREFERRED EMBODIMENT

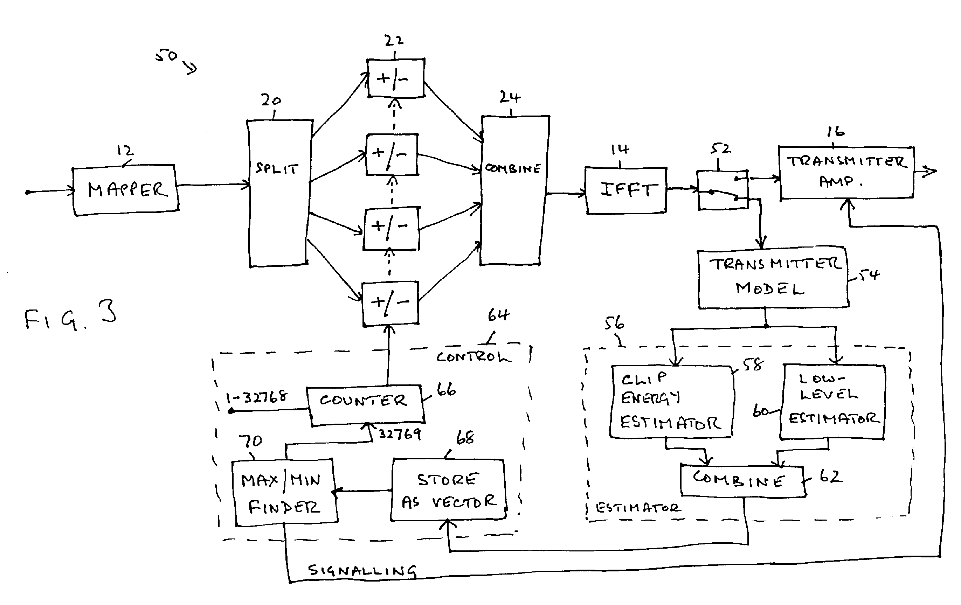

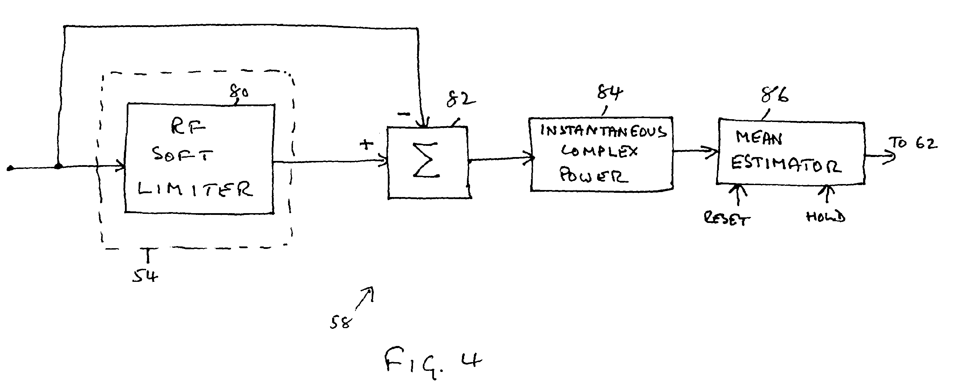

A preferred DRM transmitter embodying the invention will now be described by way of example. The preferred DRM transmitter is shown in Figure 3, and part of the transmitter is similar to Figure 1. Thus, the portion of the transmitter 50 illustrated extends from the mapper 12, which again provides a 64-QAM signal, to an inverse fast Fourier transform circuit 14, the output of which is sent to the rest of the transmitter, including an amplifier 16 and other well-known components. The IFFT 14 serves to implement the orthogonal frequency division multiplexing operation to transform the values into the time domain in a manner known per se. Between the mapper 12 and the IFFT 14 are located a splitter 20 receiving the output of the mapper 12 and applying it to so-called sign switches 22, the outputs of which are combined in a combining circuit 24 for application to the IFFT 14. Four switches only are shown in Figure 4 though in practice more than four will normally be used. The preferred number of switches is described in more detail below. The splitter 20 divides the active carriers received from the mapper 12 into a plurality of sub-bands. The sub-bands are then selectively given a positive or negative sign in all possible combinations, that is the polarity of the sub-band signals is selectively reversed.

While this is taking place, a switch 52 routes the output of the IFFT 14 not to the transmitter amplifier 16 but rather to a transmitter model circuit 54. This transmitter model 54 processes the signal in the same way as it would be processed in the transmitter amplifier 16, so that the same distortion is introduced in the transmitter nmodel 54 as would be introduced in the transmitter amplifier 16. The output of the transmitter model 54 is then applied to an estimation circuit 56, which comprises a clip energy estimator 58 and a low-level estimator 60, both of which receive the output of the transmitter model 54. The outputs of the clip energy estimator 58 and the low-level estimator 60 are combined in a combining circuit 62.

The output of the combining circuit 62 is applied to a control circuit 64 which controls the settings of the sign switches 22. The control circuit 64 includes a counter 66 for this purpose. The counter initially operates by cycling through all its possible states so that the sign switches 22 are successively set to each of their possible candidate combinations. During this operation the successive outputs of the estimator 56, more particularly the combining circuit 62, are applied to a store 68. The store 68 stores its inputs in tabular, or vector, form. When the cycle is complete the store will contain a measure of the distortion in the signal for each one of all the possible combinations of settings for the sign switches 22. A maximum/minimum finder circuit 70 then interrogates the store to determine the minimum value stored. The finder circuit 70 des not use the value itself, but rather determines which one of the possible combinations of the settings of the sign switches 22 gave rise to this minimum distortion. The finder circuit sets the counter 66 to repeat these settings. The switch 52 now changes over so that the output of the IFFT 14 is applied to the transmitter amplifier 16 and is transmitted.

Also the finder circuit 70 sends signalling information to the transmitter amplifier 16 to be included in the transmitted signal, so as to tell the receivers how to configure their sign switches; an appropriate extraction and control circuit being provided for this purpose. In this way the receivers, which can take the same form as in Figure 2, can restore the OFDM signal.

It will be appreciated that in the transmitter system of Figure 3, the splitter 20 and switches 22 constitute one way of modifying the input signal from the mapper 12 so as to generate several different candidate signals for possible transmission as an OFDM signal. As described, the splitter simply separates the inputs into different sub-bands; the manner in which this is done is not important. The sign switches provide a convenient way of manipulating the sub-bands so as to present to the IFFT or OFDM circuit 14 a large number of possible different signals for transmission. However, other ways of generating different candidate signals could be employed.

The circuit then selects the best of these candidate signals, but not by measuring the peak-to-mean power ratio, which is what is known to cause difficulties. Rather, the OFDM-form candidate signals are subjected to processing which corresponds to that which is applied by the transmitter amplifier 16. An estimate is made of the quality of the transmitted signal for each of the candidate signals, by the more empirical method of determining the amount of distortion which is found to be present after the signal has been passed through the model of the transmitter amplifier. The one of the candidate signals which provides the best estimated quality is then selected for transmission.

The processing which takes place in the transmitter model 54 ideally precisely mirrors the characteristics of the transmitter amplifier 16 and associated circuitry. In practice, however, it may only be necessary for the transmitter model 54 to reflect at least the major distortion characteristic or characteristics of the transmitter amplifier etc., 16. This will generally be the peak level clipping, or limiting, operation which takes place in the transmitter amplifier.

Along with the selected candidate signal is transmitted signalling data indicating which of the candidate signals has been selected, that is, indicating the setting of the sign switches which produced the selected candidate signal.

The amount of processing which is required is within modern technological capabilities. It will be appreciated that many of the elements which have been described as being hardware components will in practice be implemented in software.

The estimator 56 will now be described in greater detail. To reduce the peak-to-mean power ratio, the time-domain signals from the IFFT 14 are fed in turn into the clip energy estimator 58. Figure 4 shows the construction of the clip energy estimator 58 and the transmitter model 54. The output of the switch 52 is applied to the transmitter model 54, of which the important part is an RF soft limiter or clipping circuit 80. The limiter 80 clips the signal in the same way as it is clipped when transmitted through the transmitter amplifier 16. A subtractor 82 receives the clipped signal from the limiter 80 and also the undistorted signal, and subtracts the two. This is done on a symbol-by-symbol basis. The energy of the resultant difference signal is then evaluated by an instantaneous complex power circuit 84, and a mean estimator 86 calculates the mean power of the difference signal. In this way the clip energy estimator establishes for any particular signal the effect of limiting the signal envelope at a prescribed threshold. The signal yielding the lowest energy is the one which is selected for transmission.

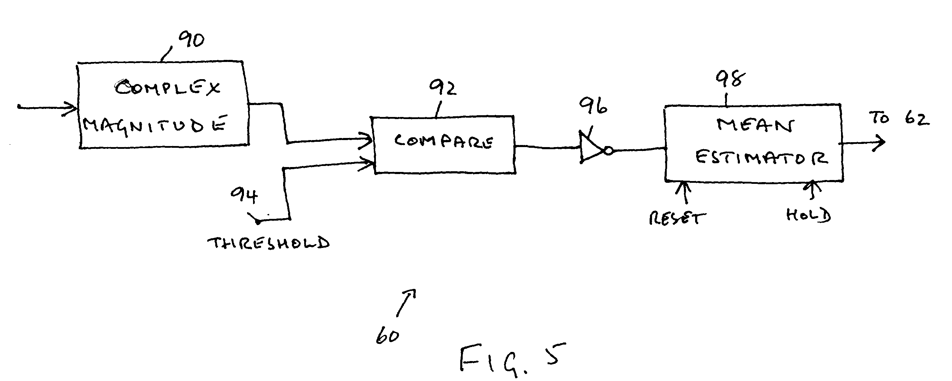

The low level estimator 60 is shown in Figure 5. Here the output of the transmitter model 54 is applied to a complex magnitude circuit 90 which determines the magnitude (or the power) of the signal. A comparator 92 receives the output of the complex magnitude circuit 90 and compares it with a threshold applied at an input 94. Typically the threshold may have the value of 0.25 of the maximum value. The comparator 92 determines when the input exceeds the threshold and provides a high output when it does which is inverted in an inverter 96. The output of the inverter 96 is applied to a mean estimator 98 which determines the mean values, dependent upon the proportion of time spent below the prescribed level. Thus, if the signal is often at a near-zero value, the circuit 60 will provide a high-value output.

In the estimator 56, the outputs of the clip energy estimator 58 and the low-level estimator 60 are weighted and combined in a combining circuit 62. In alternative arrangements, either the low-level estimator 60 or the clip energy estimator 58 may be omitted, so that only one of these estimations is made.

In the control circuit 64, the combination of settings of sign switches 22 which combines the lowest clipping distortion with the lowest total time below the low-energy threshold is chosen.

In either of the methods described, namely clip energy estimation or low-level estimation, the estimator characteristics can be precisely tailored to suit the target system. For instance, if the final transmitter amplifier 16 clips at some level L times the mean power, then the value of L is used to set the behaviour of the clip energy estimator 58. So the peak-to-mean ratio itself is not necessarily minimised. More importantly the resultant distortion due to the peaks is minimised.

That is, in order to optimise the behaviour through the particular transmitter, a model of the transmitter is used as part of the selection process, so that the most appropriate symbol from the large number generated can be selected.

The system avoids both the use of additional constellation points and the generation of unwanted distortion. The penalty is the need to signal the decisions made by the source peak-to-mean reducer to the receiver. Typically this will reduce useful payload by 3% in a 64-QAM system.

From the above, it is clear that the number of additional IFFT processes required will depend on the number of sub-bands employed. We have also found that the results obtained in terms of peak-to-mean reduction are strongly dependent on the number of sub-bands employed. Limiting the number of carriers to four per sub-band produces excellent results for a system employing 16 carriers. However, for the DRM (Digital Radio Mobile) system of 269 carriers, with four carriers per sub-band 128 sub-bands would be required (following padding from 269 to 512) which yield 2¹²⁸/2 IFFT processes, clearly not at all practical. Instead, 16 sub-bands can be chosen to limit the requirement to 32768 IFFTs, each sub-band containing 32 carriers. The results are naturally compromised as a consequence.

Thus, referring to Figure 3, the counter 66 counts up from 1 to 32768, causing the sign switches 22, of which there are now 16, to cycle through all possible combinations. On the count of 32769, the counter is set to the number supplied by the minimum finder circuit 70, to provide the actual output for transmission.

In a real system, as opposed to a simulation, the complexity can be estimated in comparison with DVB-T in 2k-mode (where the FFT complexity is known). If we compare the values of NlogN/Tsymbol for the two systems, the ratio is about 655 (using an N=512 IFFT for a 269-carrier system). So we would need 32768/655 or about 50 times the power of a DVB-T (digital video broadcasting - terrestrial) FFT chip. This requirement, whilst stringent, would not be out of place at a transmitter. Note that no additional FFTs are required in the receiver.

The proportion of capacity used for signalling can be estimated as follows. Suppose there are about 250 useful carriers with 6 bits/symbol (64-QAM). The gross data per OFDM block is thus about 1500 bits. Suppose we take 48 bits at rate 1/3 coding for the robustly signalled 16-bit configuration word and use the remaining 1452 bits at rate 1/2 coding for data. The loss of useful capacity is hence 24 bits out of 750, giving 24/750 or about 3% loss of capacity.

### Peak-to-mean reduction simulations

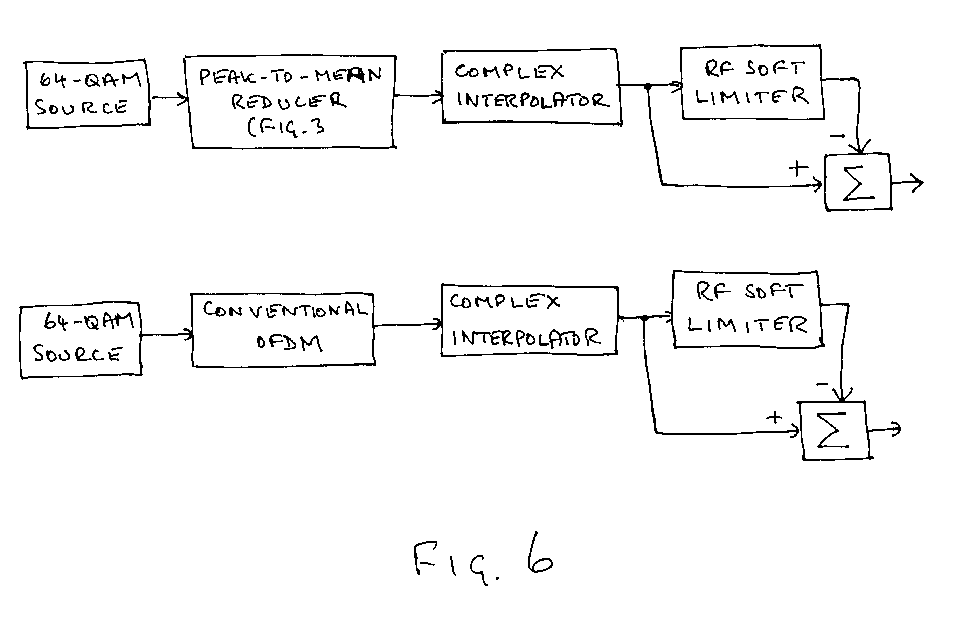

The system has been the subject of a computer simulation. The peak-to-mean reduction algorithm chosen for simulation employed a 32768-fold search, as mentioned above. A 269-carrier OFDM signal was generated using a 512-point IFFT both conventionally and using the peak-to-mean reduction algorithm. The behaviour of the two sources in conjunction with a non-linear amplifier model could then be compared directly. The overall simulation is illustrated in Figure 6. The construction of the simulation depicted in Figure 6 will be clear to those skilled in the art; it represents a test system for testing the effectiveness of the preferred embodiment and is not part of the preferred embodiment itself.

The external non-linear amplifier 16 was represented by a simple envelope clipper or limiter. The ratio of clip-to-rms signal envelope level was set at 1.5, 1.7, 1.9 and 2.2 for four sets of trials performed. For each of these values, the reduction in total distortion obtained by peak-to-mean reduction(as described with reference to Figure 4) was noted, together with the additional power available from the peak-to-mean reduced source for the same distortion to power ratio as the unprocessed source. For each of the four values, the 'clip energy estimator' of the peak-to-mean reducer block was set to 1.5, 1.7, 1.9 and 2.2 in the same way.

The total distortion was measured by simply subtracting the amplified signal from the undistorted input (the amplifier having a small-signal gain of one). The equivalent shoulder level is about 6dB lower.

The output from both OFDM sources was interpolated by a factor of eight before being passed to the non-linear amplifier. This was done to represent a reconstruction filter and prevent peaks 'in between' the original sample points being missed.

The results obtained are summarised in the Table appended to this description. The wanted OFDM signal was set to an rms input level of one unit. The length of the simulations was 20 OFDM blocks. For simplicity, no guard interval was used. In relation to the column 'Additional Power Available', note that this is based on the same distortion from the peak-to-mean reduced OFDM as for the conventional OFDM.

From the table it can be seen that the degree of distortion reduction at fixed input power varies from 4 to 9dB as the clip level is altered. The additional available power at fixed distortion, however, remains approximately constant at 0.8dB or 20%.

It may be possible to improve this figure in two distinct ways. Firstly, as already mentioned, a more exhaustive search using more sub-bands could be implemented. Secondly, the signal fed from the generating IFFT to the clip energy estimator should ideally itself be oversampled, to avoid missing peaks lying between the original coarse sample positions. This can conveniently be done by using a longer IFFT (with zero padding) prior to the estimator.

Thus a peak-to-mean reduction scheme for OFDM signals by pre-processing the OFDM using a sub-band sign switched algorithm has been described. An important field of application is DRM, where the low data rate allows the use of a search method of the type described. It is apparent from simulations that when configured for peak avoidance, useful gains of 20% in the output power of an amplifier may be obtainable. For the scheme described, about 3% of the useful channel payload is taken by signalling to allow the receiver to reconstruct the transmitted data.

### Low-envelope avoidance simulations

The algorithm chosen for these simulations again employed a 32768-fold search. Again a 269-carrier OFDM signal was generated using a 512-point IFFT. In this case, though, the processed source was configured for low-envelope avoidance rather than for peak avoidance. As already described with reference to Figure 5, this was done by using a threshold detector to establish the time spent by a candidate sub-band state below a particular level.

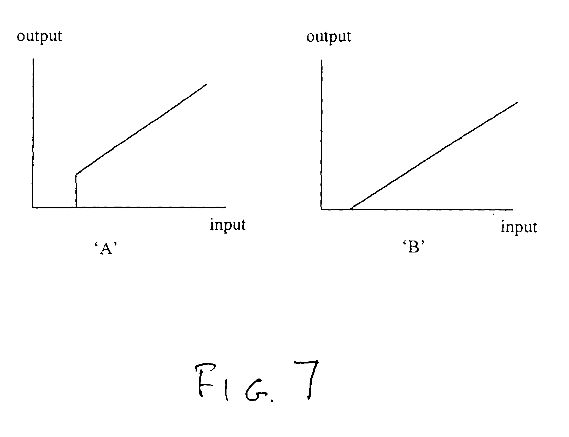

Two types of target nonlinearity were chosen, that is nonlinearity of the amplifier 16, illustrated in Figure 7 below. Both represent a form of low-end nonlinearity. Diagram 'A' looks promising in that if the low-level nonlinearity is avoided, the rest of the plot is straight and points towards the origin, which should result in distortion-free behaviour. Unfortunately, diagram 'B' is probably more realistic of the type of low-level behaviour which might be encountered in HF transmitters. Even if envelope excursions are avoided in this case, the fact that the linear region above does not extrapolate to the origin will cause distortion.

In each case the threshold of the low-level estimator 60 was set to the point at which the linear region started.

With oversampling in place after each OFDM source as discussed above, the preprocessing made no discernible improvement in the distortion level following nonlinearities 'A' or 'B'. It was suspected that this was caused by short-duration 'troughs' in the envelope being missed by the low-level estimator. The suspicion was confirmed by removing the oversampling and allowing the nonlinearities 'A' and 'B' to act upon the same time samples as the estimator. In this case, distortion in the 'A' case was dramatically improved (to zero in some cases) as predicted. Unfortunately, no improvement at all was obtained for case 'B' through a simple dc bias can greatly improve distortion in this case. Therefore a much longer search, with an oversampled signal reaching the estimator, would be desirable.

While one example of the invention has been described in detail it will be appreciated that many modifications and changes may be made within the scope of the invention as defined by the claims.

**TABLE**

| *Clip Threshold* | *Total distortion - conventional OFDM* | *Total distortion - peak-to-mean reduced OFDM* | *Additional power Available* |
|---|---|---|---|
| 1.5 | -18.2dB | -22.0dB | 0.8dB |
| 1.7 | -22.0dB | -26.5dB | 0.8dB |
| 1.9 | -26.0dB | -31.5dB | 0.8dB |
| 2.2 | -32.7dB | -41.5dB | 0.8dB |

## Claims

1. An OFDM transmitter comprising:
an input for receiving an input signal for transmission as an OFDM signal;
modifying means coupled to the input for modifying the input signal in a plurality of different predefined ways so as to generate from the input signal a plurality of different candidate signals for possible transmission as an OFDM signal;
inverse fast Fourier transform means coupled to the modifying means to transform each of the candidate signals into OFDM form;
transmitter amplifier means coupled to the output of the inverse fast Fourier transform means for transmitting a selected one of the candidate signals in OFDM form;
estimating means coupled to the output of the inverse fast Fourier transform means for subjecting the OFDM-form candidate signals to processing corresponding to that which is applied by the transmitter amplifier means and for estimating the quality of the transmitted signal for each of the candidate signals;
selecting means for selecting one of the candidate signals which provides good estimated quality and for causing the transmitter to transmit through the transmitter amplifier means the selected candidate signal as the output OFDM signal; and
means for transmitting with the selected candidate signal signalling information indicating the form of modification which is applied by the modifying means to produce the selected candidate signal.

2. An OFDM transmitter as claimed in claim 1, in which the modifying means comprises:
means for dividing the input signal into a plurality of sub-bands;
means for modifying each of the sub-bands; and
means for combining the modified sub-bands.

3. An OFDM transmitter as claimed in claim 2, in which the means for modifying each of the sub-bands comprises a plurality of sign switches for selectively reversing the polarity of the sub-band signals.

4. An OFDM transmitter as claimed in claim 1, in which the estimating means comprises a clip energy estimator.

5. An OFDM transmitter as claimed in claim 4, in which the clip energy estimator comprises:
a limiter;
comparing means for comparing the input and output of the limiter; and
means for estimating the mean value of the output of the comparing means.

6. An OFDM transmitter as claimed in claim 1, in which the estimating means comprises a low-level estimator.

7. An OFDM transmitter as claimed in claim 1, in which the low-level estimator comprises comparing means for comparing the magnitude of the signal with a threshold, and means for estimating the mean value of the output of the comparing means.

8. An OFDM transmission system comprising an OFDM transmitter and an OFDM receiver, the OFDM transmitter comprising:
an input for receiving an input signal for transmission as an OFDM signal;
modifying means coupled to the input for modifying the input signal in a plurality of different predefined ways so as to generate from the input signal a plurality of different candidate signals for possible transmission as an OFDM signal;
inverse fast Fourier transform means coupled to the modifying means to transform each of the candidate signals into OFDM form;
transmitter amplifier means coupled to the output of the inverse fast Fourier transform means for transmitting a selected one of the candidate signals in OFDM form;
estimating means coupled to the output of the inverse fast Fourier transform means for subjecting the OFDM-form candidate signals to processing corresponding to that which is applied by the transmitter amplifier means and for estimating the quality of the transmitted signal for each of the candidate signals;
selecting means for selecting one of the candidate signals which provides good estimated quality and for causing the transmitter to transmit through the transmitter amplifier means the selected candidate signal as the output OFDM signal; and
means for transmitting with the selected candidate signal signalling information indicating the form of modification which is applied by the modifying means to produce the selected candidate signal; and
the OFDM receiver comprising:
receiving means for receiving the transmitted candidate signal and the signalling information;
fast Fourier transform means coupled to the receiving means to transform the received signal back from OFDM form;
modifying means coupled to the output of the fast Fourier transform means to modify the signal output from the fast Fourier transform means; and
control means for receiving the signalling information and causing the modifying means to modify the signal output from the fast Fourier transform means in dependence thereon so as to reverse the modification reflected by the modifying means in the OFDM transmitter.

9. A method of transmitting an OFDM signal, comprising the steps of:
receiving an input signal for transmission as an OFDM signal;
modifying the input signal in a plurality of different predefined ways so as to generate from the input signal a plurality of different candidate signals for possible transmission as an OFDM signal;
transforming each of the candidate signals into OFDM form;
transmitting a selected one of the candidate signals in OFDM form;
subjecting the OFDM-form candidate signals to processing corresponding to that which is applied by the transmitter amplifier means and estimating the quality of the transmitted signal for each of the candidate signals;
selecting one of the candidate signals which provides good estimated quality and transmitting the selected candidate signal as the output OFDM signal; and
transmitting with the selected candidate signal signalling information indicating the form of modification which is applied by the modifying means to produce the selected candidate signal.

10. A method of transmitting an OFDM signal, comprising the steps of, at an OFDM transmitter:
receiving an input signal for transmission as an OFDM signal;
modifying the input signal in a plurality of different predefined ways so as to generate from the input signal a plurality of different candidate signals for possible transmission as an OFDM signal;
transforming each of the candidate signals into OFDM form;
transmitting a selected one of the candidate signals in OFDM form;
subjecting the OFDM-form candidate signals to processing corresponding to that which is applied by the transmitter amplifier means and estimating the quality of the transmitted signal for each of the candidate signals;
selecting one of the candidate signals which provides good estimated quality and transmitting the selected candidate signal as the output OFDM signal; and
transmitting with the selected candidate signal signalling information indicating the form of modification which is applied by the modifying means to produce the selected candidate signal; and
at an OFDM receiver:
receiving the transmitted candidate signal and the signalling information;
transforming the received signal back from OFDM form;
modifying the signal output from the fast Fourier transform means; and
receiving the signalling information and causing the modifying means to modify the transformed back signal in dependence thereon so as to reverse the modification introduced in the OFDM transmitter.
